# EUROPEAN PATENT SPECIFICATION

(11) **EP 3 799 713 B1**
(45) Date of publication and mention of the grant of the patent: **27.09.2023**
(21) Application number: 20176383.6
(22) Date of filing: 25.05.2020
(51) Int. Cl.: A01D 43/063, A01D 34/71

(54) **GRASS MOWING MACHINE**
RASENMÄHER
TONDEUSE À GAZON

(30) Priority: 02.10.2019 JP 2019182262
(43) Date of publication of application: 07.04.2021
(73) Proprietor: Kubota Corporation, Osaka-shi, Osaka 556-8601 (JP)
(72) Inventor: TASHIMA, Shinya, Sakai-shi, Osaka, 590-0823 (JP); TONOYA, Yoshihisa, Sakai-shi, Osaka, 590-0823 (JP); SHIBATA, Takashi, Sakai-shi, Osaka, 590-0823 (JP)
(74) Representative: Cabinet Beau de Loménie

(56) References cited:
- EP-A1- 3 050 424
- EP-A1- 3 409 096
- FR-A1- 2 860 949
- FR-A1- 2 862 480
- FR-B1- 2 860 949
- FR-B1- 2 862 480

## Description

### TECHNICAL FIELD

The present invention relates to a grass mowing machine.

### BACKGROUND ART

As a grass mowing machine including a mower disposed under a machine body and configured to carry out a grass cutting work, a grass collecting section disposed at a rear portion of the machine body and configured to collect cut grass pieces and a duct for guiding the cut grass pieces cut by the mower to the grass collecting section, there is known an arrangement in which the mower includes a cylindrical discharging section for discharging the cut grass pieces to the duct and a guide member which forms a bottom portion of the discharging section and which is vertically pivotable, the duct includes a duct body and a bottom plate provided at a lower portion of the inner space of the duct body to be vertically pivotable, a manually operable guide operational lever is provided for pivotally operating the guide member, and the bottom plate is supported to be vertically pivotable between a cut grass conveying posture in which a front portion thereof is placed near a rear portion of the guide member and a maintenance posture in which the front portion is placed upwardly away from the rear portion of the guide member.

With this grass mowing machine, when adherence or clogging of cut grass pieces in the discharging section occurs, by pivotally operating the guide member by the guide operational lever, the adherence of cut grass pieces can be released or the clogging of cut grass pieces can be resolved, and by switching the posture of the bottom plate to the maintenance posture, the distance between the rear portion of the guide member and the front portion of the bottom plate is increased to allow discharging of the cut grass pieces through between the guide member and the bottom plate.

As a grass mowing machine of this type, a grass mowing machine is known from Patent Document 1 for example. The grass mowing machine disclosed in Patent Document 1 includes a first duct as the discharging section, a first bottom plate as the guide member, a first operational lever as the guide operational lever and a second bottom plate as the bottom plate, respectively.

### BACKGROUND ART DOCUMENT

### PATENT DOCUMENT

Patent Document 1: Japanese Unexamined Patent Application Publication No. 2018-201383
EP 3 050 424 A1 discloses another example of grass mowing machine.

### SUMMARY OF THE INVENTION

### PROBLEM TO BE SOLVED BY INVENTION

When a grass cutting (mowing) work is to be carried out, it is necessary to keep the bottom plate under the cut grass conveying posture reliably so that the bottom plate may not be inadvertently switched to the maintenance posture due to e.g. traveling vibration, thus leading to leakage of cut grass pieces through between the guide member and the bottom plate. Whereas, when cut grass pieces which have been accumulated or clogged in the discharging section are to be discharged, if the bottom plate is set under the cut grass conveying posture, the distance (space or gap) between the rear portion of the guide member and the front portion of the bottom plate is too narrow or small to allow discharging of the cut grass pieces. So, in order to keep a large distance (space or gap) between the rear portion of the guide member and the front portion of the bottom plate, the bottom plate will be maintained under the maintenance posture and the guide member will be pivotally operated under this state. However, if the bottom plate needs to be maintained under the maintenance posture by continuation of a manual operation of elevating the bottom plate to the maintenance posture in the case of an arrangement e.g. that the bottom plate is to be maintained under the cut grass conveying posture with a lowering pivotal movement thereof by the weight of this bottom plate per se, the above will require execution of a guide operational lever operation for pivoting the guide member, while carrying out the manual operation for maintaining the bottom plate under the maintenance posture at the same time. Thus, the discharging operation is difficult to carry out. In the case of maintaining the bottom plate under the cut grass conveying posture by such lowering pivotal movement of the bottom plate by its own weight, the operation for elevating the bottom plate to the maintenance posture will provide a heavy operational feel. This further increases the difficulty of the discharging operation.

The present invention provides a grass mowing machine that can facilitate a discharging operation of cut grass pieces accumulated or clogged in the discharging section while allowing the bottom plate to be maintained under the cut grass conveying posture in a reliable manner.

### SOLUTION

A grass mowing machine according to one embodiment of the present invention comprises:
a mower disposed under a machine body and configured to carry out a grass cutting work;
a grass collecting section disposed at a rear portion of the machine body and configured to collect cut grass pieces; and
a duct for guiding the cut grass pieces cut by the mower to the grass collecting section;
wherein the mower includes:
   a discharging section formed cylindrical and configured to discharge the cut grass pieces to the duct: and
   a guide member which forms a bottom portion of the discharging section and which is vertically pivotable;
wherein the duct includes:
   a duct body; and
   a bottom plate provided at a lower portion of the inner space of the duct body; and
a guide operational lever manually operable for pivotally operating the guide member;
wherein the bottom plate is supported to be vertically pivotable between a cut grass conveying posture in which a front portion thereof is placed close to a rear portion of the guide member and a maintenance posture in which the front portion is placed upwardly away from the rear portion of the guide member; and
wherein a bottom plate operational tool is provided for switching over between a first operational state for switching the posture of the bottom plate to the cut grass conveying posture and maintaining the bottom plate under the cut grass conveying posture and a second operational state for switching the posture of the bottom plate to the maintenance posture and maintaining the bottom plate under the maintenance posture.

With the above-described inventive arrangement, when the bottom plate operational tool is switched to the first operational state, the bottom plate is maintained under the cut grass conveying posture in association with this switchover of the bottom plate operational tool to the first operational state. As a result, when a grass cutting work is to be carried out, the bottom plate can be maintained under the cut grass conveying posture reliably.

Whereas, when the bottom plate operational tool is switched to the second operational state, the bottom plate is maintained under the maintenance posture in association with this switchover of the bottom plate operational tool to the second operational state. As a result, when a discharging operation of cut grass pieces accumulated or clogged in the discharging section is to be carried out, the bottom plate is maintained under the maintenance posture only with the operation of switching the bottom plate operational tool to the second operational state. After this switchover of the bottom plate operational tool to the second operational state, a maintenance operation can be carried out easily only by operating the guide operational lever for pivoting the guide member.

Preferably, in the above-described inventive arrangement:
the bottom plate operational tool may comprise an- operational lever manually operable and operably coupled with the bottom plate via a coupling mechanism; and
a detent mechanism may be provided for switching over the operational lever between a first maintaining state for maintaining the operational lever under the first operational state and a second maintaining state for maintaining the operational lever under the second operational state.

With the above-described inventive arrangement, by a relatively structurally simple and inexpensive arrangement of constituting the bottom plate operational member of an operational lever and providing a detent mechanism, the bottom plate can be reliably maintained under the cut grass conveying posture and also the bottom plate can be maintained under the maintenance posture only with switchover of the operational lever to the second operational state.

Preferably, in the above-described inventive arrangement:
the detent mechanism may include a spring for urging the operational lever and a coupling member for operably coupling the spring to the operational lever; and
the coupling member may be configured to switch over the spring to an urging state for urging the operational lever to the first operational state in association with switchover of the operational lever to the first operational state and to switch over the spring to an urging state for urging the operational lever to the second operational state in association with switchover of the operational lever to the second operational state.

With the above-described inventive arrangement, as the operational lever is urged to the first operational state and to the second operational state respectively by being urged by the spring, the bottom plate is maintained under the cut grass conveying posture and the maintenance posture, respectively. Thus, the bottom plate can be maintained reliably under the cut grass conveying posture and the maintenance posture, respectively.

### BRIEF DESCRIPTION OF THE DRAWINGS

Fig. 1 is a general side view of a grass mowing machine,
Fig. 2 is a general plan view of the grass mowing machine,
Fig.3 is a plan view of a mower,
Fig. 4 is a side view showing a mower disposing portion under a ground contacting state,
Fig. 5 is a side view in vertical section showing a discharging section and a duct under the ground contacting state,
Fig. 6 is a side view showing the mower disposing portion under an elevated state,
Fig. 7 is a side view in vertical section showing the discharging section and the duct under the elevated state,
Fig. 8 is a plan view in horizontal section showing the discharging section and the duct,
Fig. 9 is a front view in vertical section showing the duct,
Fig. 10 is a perspective view showing an operation coupling arrangement,
Fig. 11 is a side view showing a guide member, a bottom plate and a bottom plate operational tool under a cutting work state,
Fig. 12 is a side view showing the guide member, the bottom plate and the bottom plate operational tool under a cut grass discharging state,
Fig. 13 is a plan view showing a mower coupling mechanism of a further embodiment and a deformation preventing member of a further embodiment,
Fig. 14 is a front view in vertical section showing the mower coupling mechanism of the further embodiment and the deformation preventing member of the further embodiment, and
Fig. 15 is a left side view showing the mower coupling mechanism of the further embodiment and the deformation preventing member of the further embodiment.

### EMBODIMENTS

Next, embodiments of the present invention will be explained with reference to the accompanying drawings.

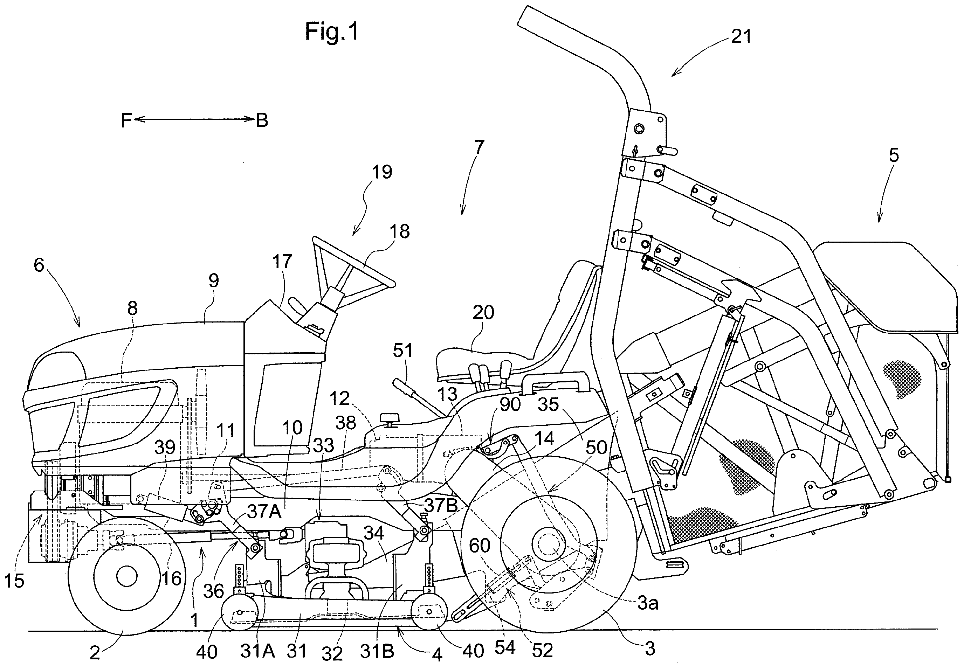

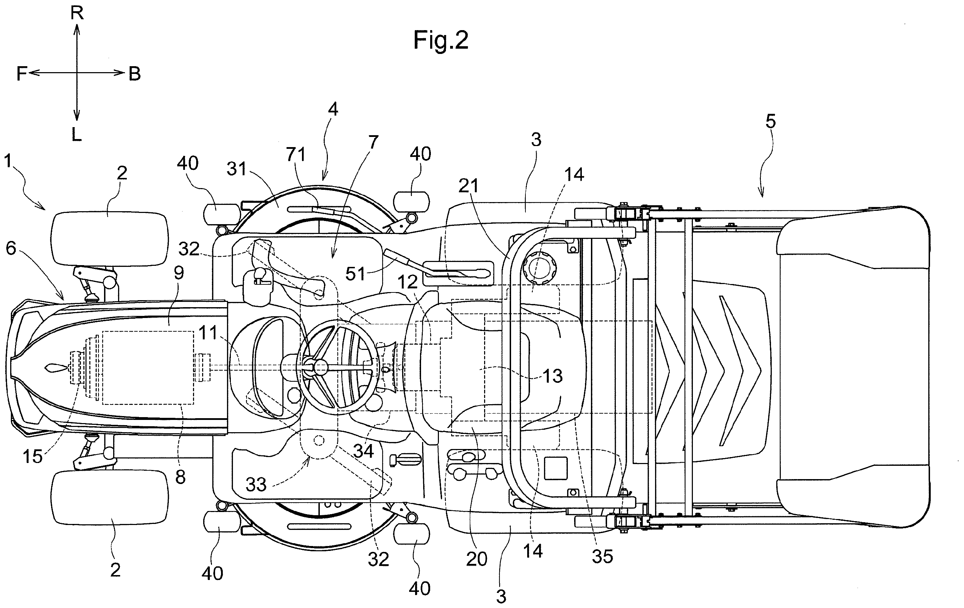

Incidentally, in the following detailed disclosure, the front/rear direction and the left/right direction are defined as follows, unless explicitly indicated otherwise. Namely, the advancing direction (see arrow F in Fig. 1) on the forward traveling side at the time of a work traveling of a riding type grass mowing machine relating to the present invention is defined as "front" and the advancing direction to the rear side (see arrow B in Fig. 2) is defined as "rear". In addition, the direction corresponding to the right side (see arrow R in Fig. 2) relative to the forwardly oriented posture in the front/rear direction is defined as "right" and the direction on the left side similarly (see arrow L in Fig. 2) is defined as the "left", respectively.

### [General Configuration]

As shown in Figs. 1 and 2, a grass mowing machine includes a pair of left and right steerable front wheels 2 on the front side of a traveling machine body 1 and includes a pair of left and right drivable rear wheels 3 on the rear side for self-propelled traveling of the machine. Under the vehicle body and between the front wheels 2 and the rear wheels 3 in the front/rear direction, a rear discharge type mower 4 is suspended to be liftable up/down. On the rear side of the traveling machine body 1, there is provided a grass collecting container 5 as a "grass collecting section" for accommodating grass pieces cut or mowed by the mower 4.

An engine section 6 is provided at a front portion of the traveling machine body 1 and on the rear side of the engine section 6, a riding driving section 7 is provided. In the engine section 6, an engine 8, as being accommodated in an engine hood 9, is mounted and supported to a machine body frame 10. Power taken out from the rear side of the engine 8 is inputted via a transmission shaft 11 extending rearwards to a hydrostatic stepless speed changer device (HST) 12 disposed rearwardly. An output from the hydrostatic stepless speed changer device 12 is transmitted via a transmission case 13 provided at a rear portion and chain transmission mechanisms (not shown) incorporated within transmission cases 14 on the left and right opposed sides to left and right rear axles 3a to drive the rear wheels 3. Each transmission case 14 extends obliquely rearwardly downwards from a lateral side of the transmission case 13.

Forwardly of the engine 8, there is provided a PTO mechanism 15 constituted of a belt transmission mechanism. Thus, via a PTO shaft 16 included in the PTO mechanism 15 and a transmission mechanism 33 provided at an upper portion of the mower 4, power of the engine 8 is transmitted to the mower 4.

In the riding driving section 7, there is provided a maneuvering section 19 including a maneuvering panel 17 continuous with the rear side of the engine hood 9, a steering wheel 18 capable of steering the front wheels 2, etc. In addition, rearwardly of the maneuvering section 19, a driver's seat 20 is disposed and at a portion of the rear side of the driver's seat 20, a ROPS 21 is provided.

### [Arrangement of Mower]

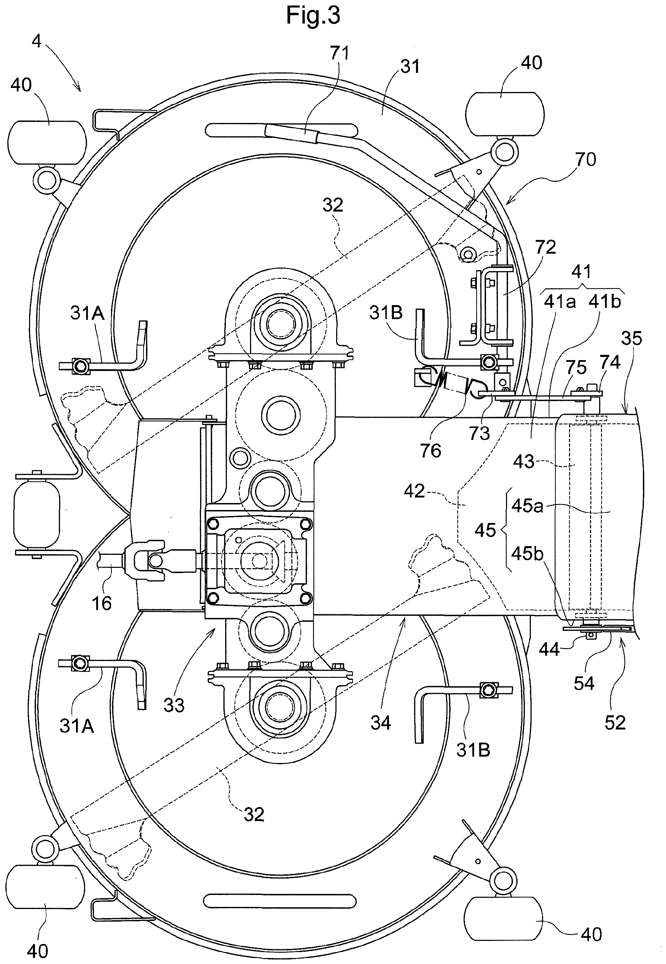

As shown in Fig. 3, the mower 4 has an arrangement in which two blades 32 are disposed on the left and right sides inside a cutter blade housing 31. The left blade 32 is rotatably driven clockwise and the right blade 32 is rotatably driven counterclockwise. In this way, the respective blades 32 are rotatably driven in opposite directions. As the left blade 32 is driven clockwise and the right blade 32 is driven counterclockwise, cut grass pieces as riding on a conveying air current generated in association with the rotations of the two blades are discharged to the rear side from the discharging section 34 formed near the center of the rear portion of the cutter blade housing 31. The cut grass pieces discharged from the discharging section 34 will then be guided by a grass collecting duct 35 connected to this discharging section 34 and sent into the grass collecting container 5 (see Fig. 1) to be accommodated therein.

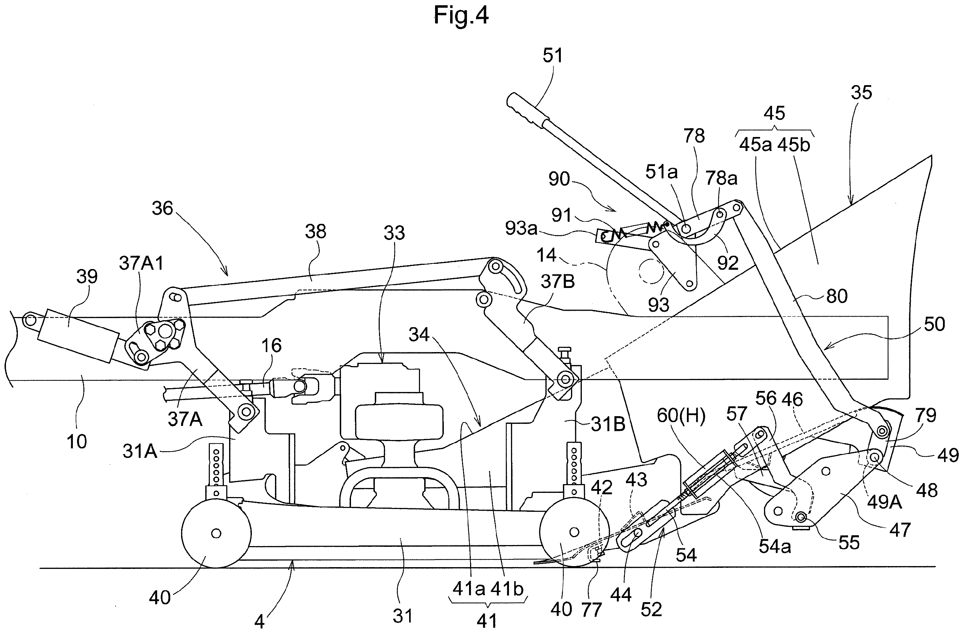

As shown in Fig. 4, the mower 4 is supported to the machine body frame 10 via a lift link mechanism 36 to be liftable up/down. The lift link mechanism 36 includes, one set on each left and right side thereof, a pair of front and rear pivot links 37A, 37B having upper end sides thereof pivotally connected to the machine body frame 10 and having lower end sides thereof pivotally connected to the cutter blade housing 31.

At a front side portion and a rear side portion respectively at the upper portion of the cutter blade housing 31, there are vertically disposed a pair of left and right vertically oriented extension portions 31A, 31B extending upwards from the upper (top) face of the cutter blade housing 31. As shown in Fig. 3, the front side vertically oriented extension portion 31A and the rear side vertically oriented extension portion 31B each has a shape of a plate bent in approximately L shape as seen in the plan view and integrally connected to the upper face of the cutter blade housing 31 by welding.

The front side pivot link 37A has its one end pivotally connected to the machine body frame 10 of the traveling machine body 1 to be pivotable about a horizontally oriented axis and has its other end pivotally connected to an upper portion of the front side vertically oriented extension portion 31A to be pivotable about a horizontal axis. On the other hand, the rear side pivot link 37B has its one end pivotally connected to the machine body frame 10 of the traveling machine body 1 to be pivotable about a horizontally oriented axis and has its other end pivotally connected to an upper portion of the rear side vertically oriented extension portion 31B to be pivotable about a horizontally oriented axis.

As shown in Fig. 4, the front side pivot link 37A and the rear side pivot link 37B have upper end sides thereof operably coupled to each other via a coupling rod 38 and one end portion of a lifting hydraulic cylinder 39 is pivotally connected to an operational portion 37A1 formed in the front side pivot link 37A. The other end portion of the hydraulic cylinder 39 is pivotally connected to the machine body frame 10. As the pivot links 37A, 37B are pivotally operated in association with an expansion/contraction movement of the hydraulic cylinder 39, the mower 4 can be lifted up/down. Under a mowing operation condition, the mower 4 carries out a mowing traveling operation with placing gauge wheels 40 provided at the lower end portion of the cutter blade housing 31 in contact with the ground surface.

As shown in Figs. 3, 4 and 5, the discharging section 34 is formed to extend rearwards obliquely upwards to a position rearwardly of the left/right center portion of the cutter blade housing 31. The discharging section 34 includes a discharging section body 41 formed integrally and continuously with the cutter blade housing 31 and a guide member 42 forming the bottom of the discharging section body 41. The discharging section body 41 includes a ceiling face 41a and left and right opposed side faces 41b and formed in a reverse (upside down) U-shape as seen in the front/rear direction. In addition, a plate-like guide member 42 is provided to cover the lower side of the inner space formed by the discharging section body 41 and the guide member 42. Therefore the discharging section body 41 and the guide member 42 together form an approximately rectangular cylindrical conveying passage which extends obliquely upwardly rearwards. In midway of the conveying passage of the guide member 42, there is formed an upward guiding face 43 for guiding cut grass pieces upwards.

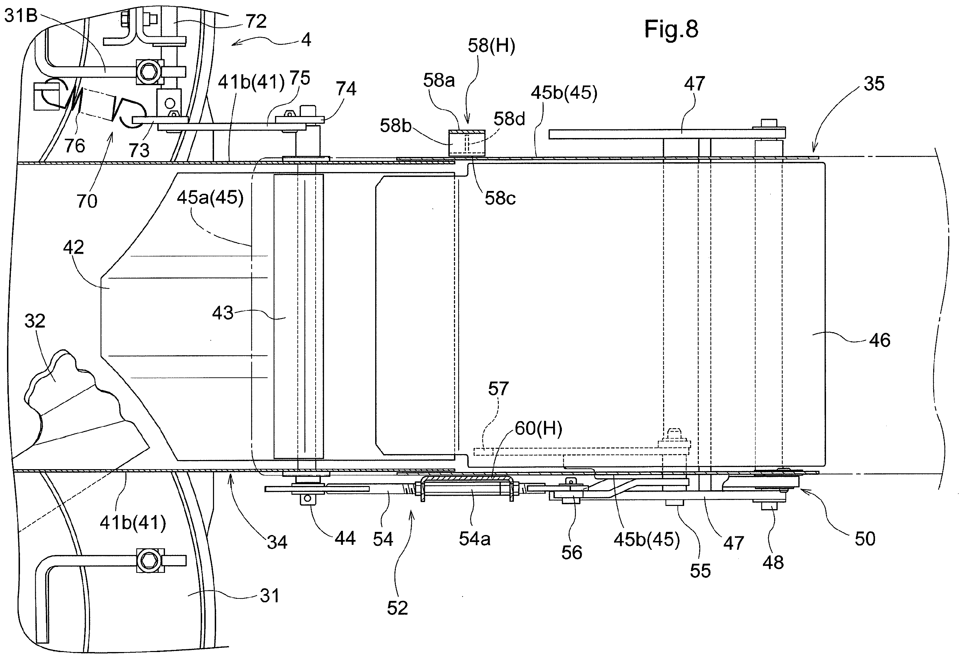

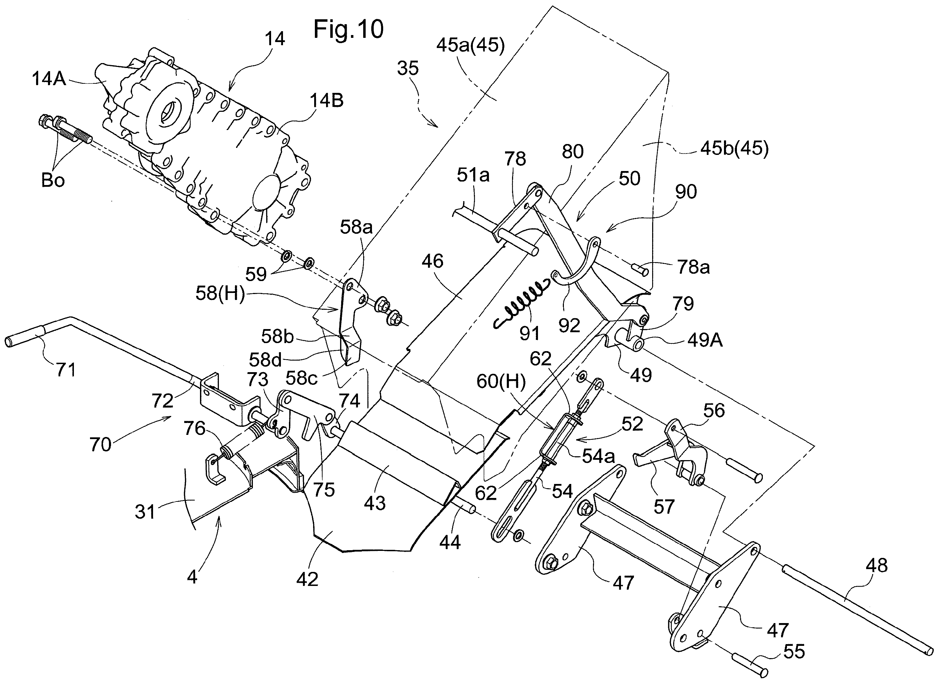

As shown in Fig. 8 and Fig. 10, the guide member 42 is vertically pivotally supported to the cutter blade housing 31 via a support shaft 44 extending between the left and right opposed side faces 41b of the discharging section body 41. The guide member 42 is operably coupled to a first operational lever 71 provided adjacent the driver's seat 20 via a first coupling mechanism 70. The guide member 42 is pivotally operable by a manual operation of the first operational lever 71. When there occurs clogging of cut grass pieces in the discharging section 34 in association with a grass mowing work, by reciprocally pivotally operating the first operational lever 71, the clogging of the cut grass pieces can be resolved to allow conveying thereof.

As shown in Figs. 3, 5 and 8, the first coupling mechanism 70 includes the first operational lever 71 having a left/right oriented support shaft portion 72 and vertically pivotally supported to a right end portion of the cutter blade housing 31, a first arm 73 fixed to a left end portion of the support shaft 72, a second arm 74 fixed to a right end portion of the support shaft 44, a push-pull link 75 for operably coupling the first arm 73 with the second arm 74, a tensile spring 76, and so on. As the first arm 73 is pivotally urged in a forwardly inclining direction by a function of the tensile spring 76 and also is restricted in its movement by an abutment portion 77, the guide member 42 is maintained under a rearwardly elevated guiding posture. When the first operational lever 71 is pivotally pulled rearwardly upwards, the guide member 42 can be pivoted from the rearwardly elevated guiding posture in the forwardly upward direction against the urging force of the tensile pull spring 76.

If clogging of adhesive accumulation of cut grass pieces to the guide member 42 occurs in the discharging section 34 in the course of a grass mowing work, the driver, as being seated at the driver's seat 20, will vertically pivot the first operational lever 71, whereby the guide member 42 can be vertically pivoted to eliminate the adhering accumulated cut grass pieces.

### [Grass Collecting Duct]

Next, the grass collecting duct 35 will be explained.

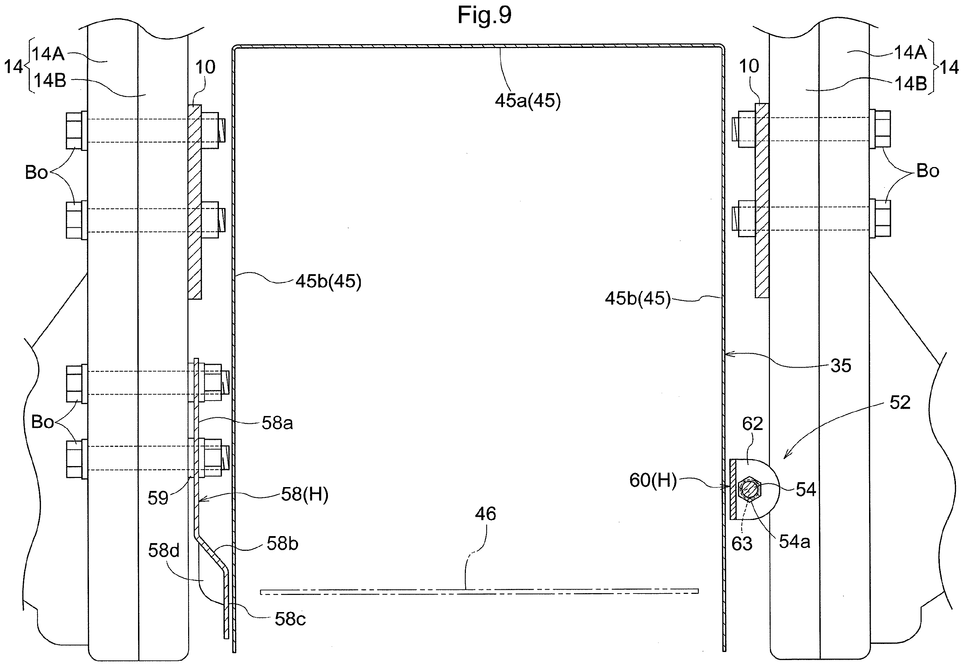

As shown in Figs. 3, 4, 5 and 8, the grass mowing machine includes the grass collecting duct 35 connected in communication with the discharging section 34 formed in the cutter blade housing 31 and configured to guide cut grass pieces sent out from the discharging section 34. As shown in Fig. 1 and Fig. 9, this duct 35 is provided to extend in the front/rear direction in the space formed between the left and right transmission cases 14.

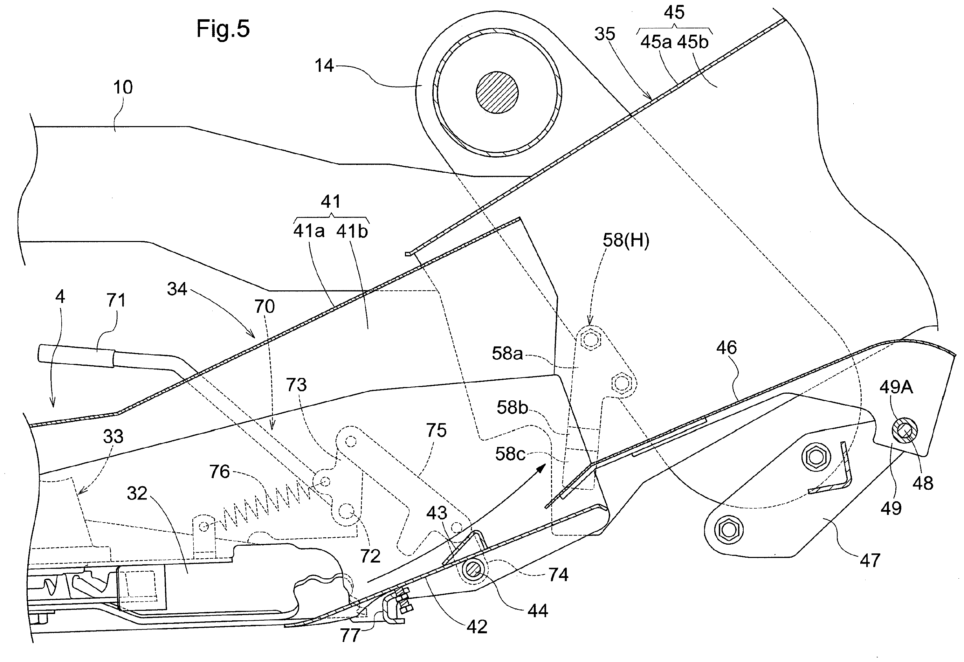

As shown in Figs. 5, 8 and 9, the duct 35 includes a duct body 45 and a bottom plate 46. The duct body 45 includes a ceiling face 45a and left and right opposed side faces 45b and is provided in the form of reverse (upside down) U-shape as seen in the front/rear direction. The planar bottom plate 46 is provided in such a manner as to cover the lower side of the inner space formed by the duct body 45. Therefore, like the discharging section 34 of the mower 4, the inner area surrounded or delimited by the duct body 45 and the bottom plate 46 forms a conveying passage in the form of an approximately rectangular cylindrical shape which extends obliquely upwards.

On the left and right opposed outer sides of the duct 35, there are provided support members 47 which are fixed in position there. Though not shown, each support member 47 is supported in position-fixed state as being connected to the machine body frame 10, the transmission cases 14, etc. The bottom plate 46 of the duct 35 is supported by the left and right support members 47 to be vertically pivotable about a horizontal axis. More particularly, as shown in Figs. 5, 8 and 10, a pivot support shaft 48 is provided astride the left and right support members 47. Left and right support arms 49 are integrally connected to the lower face of the bottom plate 46 and extend rearwardly downwards. Boss portions 49A provided at extension end portions of the left and right support arms 49 are pivotally fitted and supported on the pivot support shaft 48.

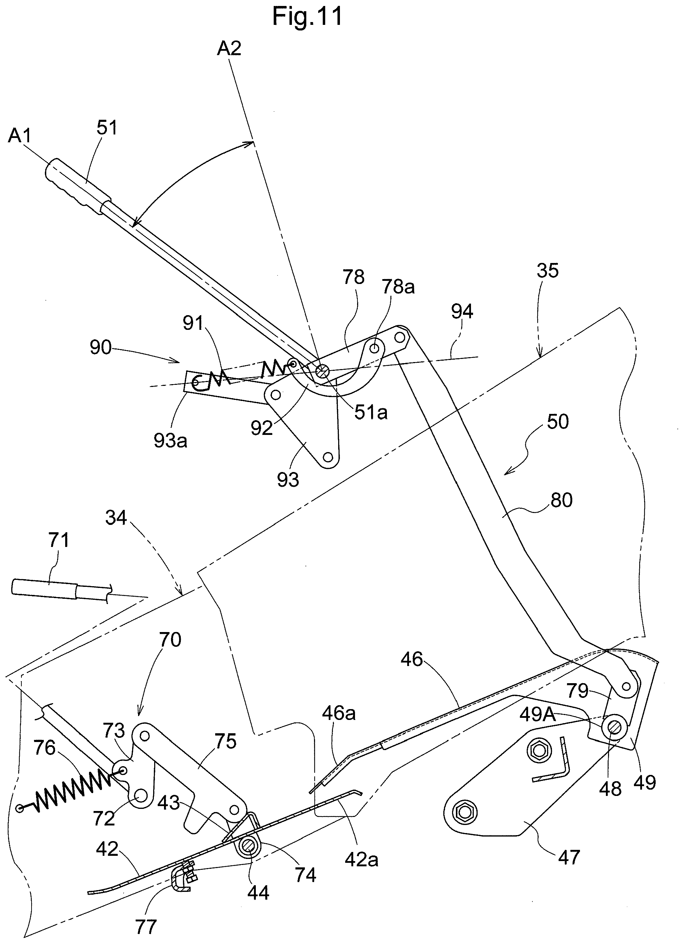

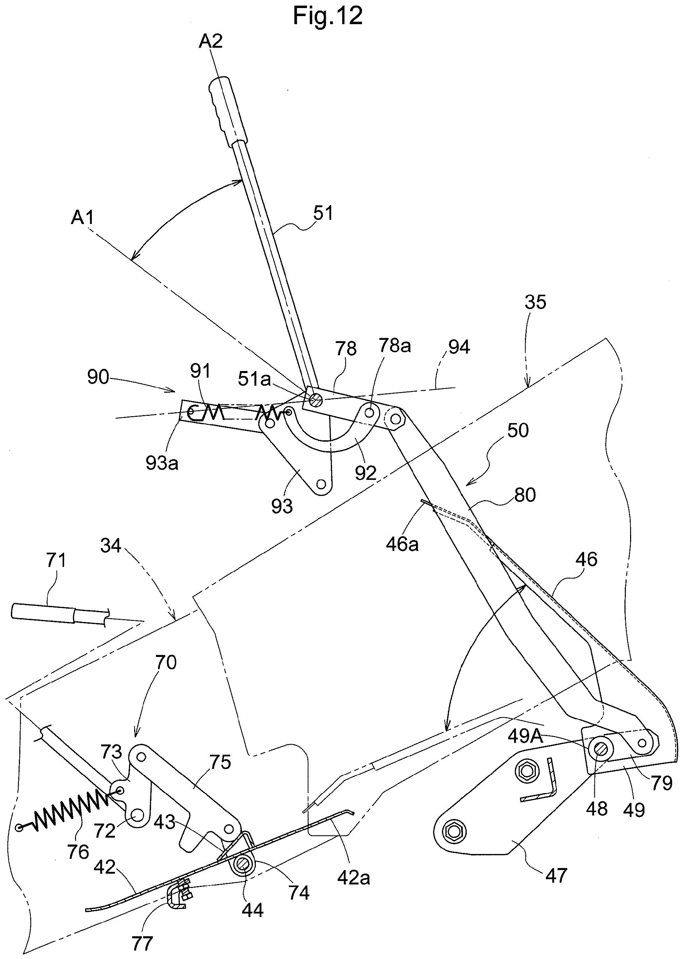

The bottom plate 46 is supported to be vertically pivotable about the pivot support shaft 48 as the "pivot" between a cut grass conveying posture in which a front portion 46a thereof is placed close to a rear portion 42a of the guide member 42 as shown in Fig. 11 and a maintenance posture in which the front portion 46a of the bottom plate 46 is placed upwardly away from the rear portion 42a of the guide member 42 to allow discharging of cut grass pieces from between the guide member 42 and the bottom plate 46, as shown in Fig. 12.

The bottom plate 46 of the duct 35 is operably coupled with a second operational lever 51 provided on a lateral side of the driver's seat 20 (see Fig. 1) via a second coupling mechanism 50, so that the bottom plate 46 can be pivotally operated by an operation of the second operational lever 51 (see Fig. 1). As shown in Fig. 4 and Fig. 10, the second operational lever 51 is supported to be pivotable by a horizontally oriented shaft portion 51a, and to a left end portion of this horizontally oriented shaft portion 51a, a first arm 78 is provided to be pivotable therewith. The first arm 78 and a second arm 79 provided continuous from the pivot boss portion 49A of the support arm 49 are operably coupled to each other via a push-pull link 80.

The second operational lever 51 and the bottom plate 46 are operably coupled to each other via the second coupling mechanism 50 as a "coupling mechanism". This second coupling mechanism 50 is constituted of the horizontally oriented shaft portion 51a, the first arm 78, the push-pull link 80, the second arm 79 and the pivot boss portions 49A.

As shown in Figs. 4 and 11, to the second operational lever 51, a detent mechanism 90 is attached. This detent mechanism 90 makes it possible for the second operational lever 51 to maintain the bottom plate 46 under a cut grass conveying posture and a maintenance posture, respectively.

Specifically, the detent mechanism 90, as shown in Figs. 4 and 11, includes a spring 91 for urging the second operational lever 51 and a coupling member 92 for operably coupling the spring 91 to the operational lever 51. The end portion of the spring 91 opposite to the side of the coupling member is supported to a support portion 93a. This support portion 93a extends from a bracket 93 that supports the second operational lever 51 and the bracket 93 is fixed to the transmission case 14. The coupling member 92 operably couples the end portion of the spring 91 opposite to the bracket side and the first arm 78, thus operably coupling the end portion of the spring 91 opposite to the bracket side to the second operational lever 51. The coupling member 92 is formed like an arc as seen along the direction of the horizontally oriented shaft portion 51a acting as the pivot of the second operational lever 51.

With the detent mechanism 90, as shown in Fig. 11, when the second operational lever 51 is switched over to a first operational state A1 and the posture of the bottom plate 46 is switched over to the cut grass conveying posture via the operable coupling arrangement of the second coupling mechanism 50, in response to a pivotal movement of the first arm 78, a connection point 78a for the coupling member 92 of the first arm 78 will move upwardly beyond a dead point 94, so that the coupling member 92 will assume a posture located upwardly of the horizontally oriented shaft portion 51a acting as the pivot of the second operational lever 51, and the spring 91 will be operated by the coupling member 92 to urge the second operational lever 51 into the first operational state A1. Namely, the detent mechanism 90, in association with switchover of the second operational lever 51 to the first operational state A1, is rendered into a first maintaining state for maintaining the second operational lever 51 under the first operational state A1 by the elastic resilient force of the spring 91, thus allowing the second operational lever 51 to maintain the bottom plate 46 under the cut grass conveying posture.

Further, with this detent mechanism 90, as shown in Fig. 12, when the second operational lever 51 is switched over to a second operational state A2 and the posture of the bottom plate 46 is switched over to the maintenance posture via the operable coupling arrangement of the second coupling mechanism 50, in response to a pivotal movement of the first arm 78, the connection point 78a will move downwardly beyond the dead point 94, so that the coupling member 92 will assume a posture located downwardly of the horizontally oriented shaft portion 51a, and the spring 91 will be operated by the coupling member 92 to urge the second operational lever 51 into the second operational state A2. Namely, the detent mechanism 90, in association with switchover of the second operational lever 51 to the second operational state A2, is rendered into a second maintaining state for maintaining the second operational lever 51 under the second operational state A2 by the elastic resilient force of the spring 91, thus allowing the second operational lever 51 to maintain the bottom plate 46 under the maintenance posture.

When a grass cutting work is to be carried out, as shown in Fig. 11, if the second operational lever 51 as a "bottom plate operational tool" is switched over to the first operational state A1, then, the second operational lever 51 switches over the bottom plate 46 into the cut grass conveying posture by the function of the second coupling mechanism 50. Furthermore, the second operational lever 51 maintains the bottom plate 46 under the cut grass conveying posture by the function of the detent mechanism 90, so that cut grass pieces discharged from the discharging section 34 can be guided via the duct 35 to the grass collecting container 5.

When cut grass pieces are adhered or clogged in the discharging section 34, as shown in Fig. 12, the second operational lever 51 will be switched over to the second operational state A2. With this, the second operational lever 51 switches over the bottom plate 46 to the maintenance posture by the function of the second coupling mechanism 50. Also, the second operational lever 51 maintains the bottom plate 46 under the maintenance posture by the function of the detent mechanism 90. With this, by pivotally operating the guide member 42 by means of the first operational lever 71 as a "guide operational lever", released cut grass pieces released from adhesion or clogging can be discharged from between the guide member 42 and the bottom plate 46 to the outside of the discharging section 34.

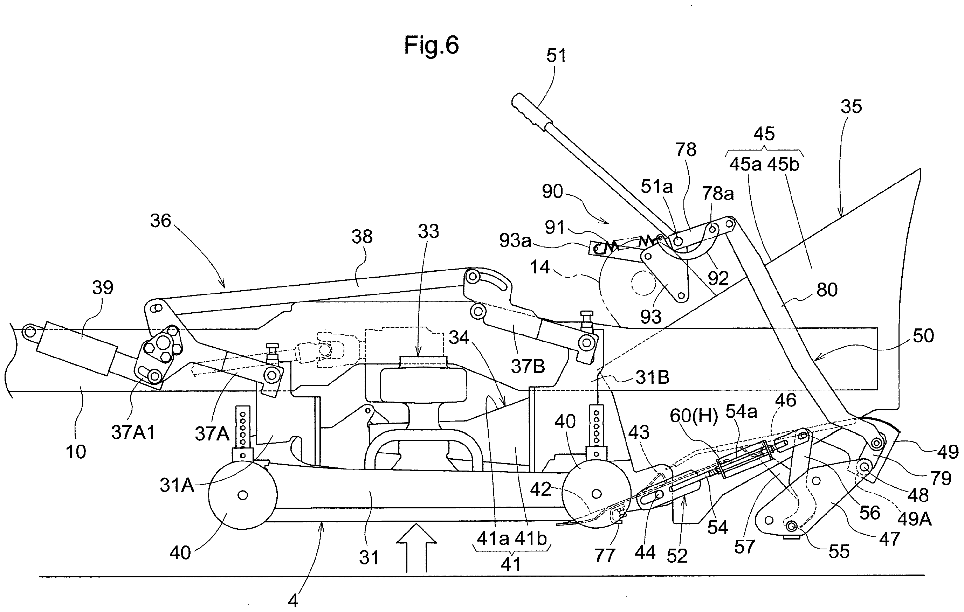

In addition to the posture switchover by the operational lever 51, the bottom plate 46 of the duct 35 can be posture-changed also in operative association with a lifting up/down operation of the mower 4. More particularly, as shown in Figs. 4 and 6, in order to allow such posture change of the bottom plate 46 in association with a lifting up/down of the mower 4, a mower coupling mechanism 52 is provided for operably coupling the mower 4 with the bottom plate 46. This mower coupling mechanism 52 is provided to be positioned on the left outer side of the duct 35.

The mower coupling mechanism 52 includes a push-pull link 54 having one end portion thereof operably coupled to the left end portion of the support shaft 44 supporting the guide member 42, a pivot pin 55 provided in the support member 47, a first pivot arm 56 to which the other end portion of the push-pull link 54 is pivotally connected and which is pivotally supported by the pivot pin 55, and a second pivot arm 57 supported to the pivot pin 55 to be pivotable therewith and having a pivotal end which comes into contact with the lower face of the bottom plate 46. The push-pull link 54 includes a turnbuckle portion 54a.

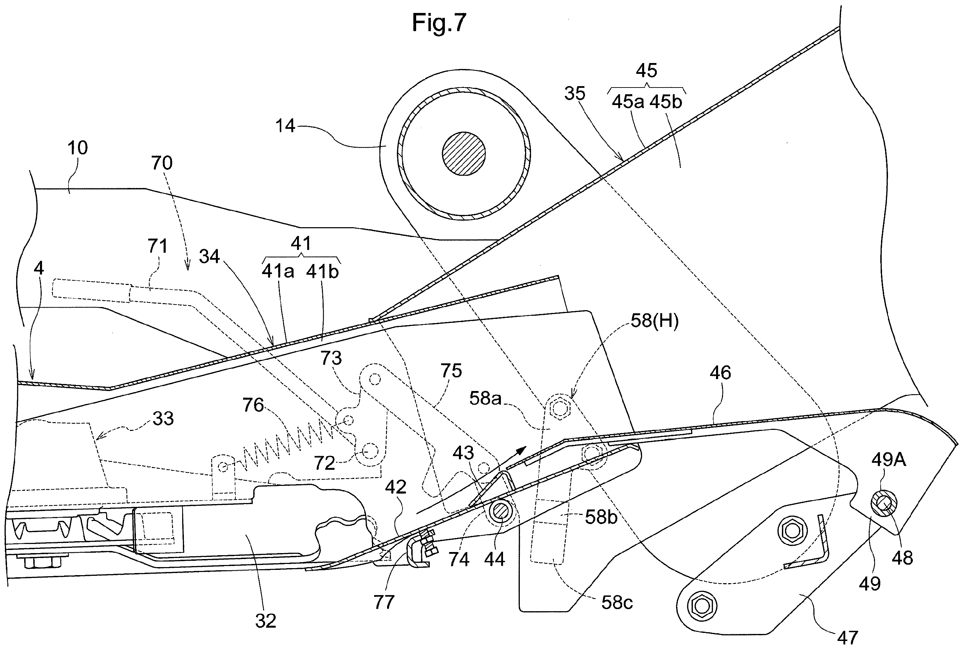

When the mower 4 is elevated, in association therewith, the support shaft 44 is elevated to push the push-pull ink 54, whereby the first pivot arm 56 and the second pivot arm 57 are pivoted to change posture of the bottom plate 46 into the forwardly elevated state (see Fig. 7). Conversely, when the mower 4 is lowered, the pivot shaft 44 is lowered to pull the push-pull link 54, whereby the first pivot arm 56 and the second pivot arm 57 are pivoted to change posture of the bottom plate 46 into the forwardly lowered state (see Fig. 5). As a result, it is possible to prevent damage from being given to the bottom plate 46 due to elevating and lowering of the mower 4 and to prevent inadvertent discharging of cut grass pieces from a gap formed between the guide member 42 and the bottom plate 46.

The coupling portion of the push-pull link 54 to the pivot shaft 44 is provided as an elongate hole, so that even with posture switchover by an operation of the operational lever 51, there will occur no pivotal movement of the guide member 42 in association therewith and there will occur no pivotal movement of the bottom plate 46 in association with the pivotal operation of the guide member 42, either.

### [Deformation Preventing Member]

As shown in Figs. 5, 8, 9 and 10, on the right side of the duct 35, there is provided a duct stopper 58 as a right-side "deformation preventing member" H for suppressing posture change of the duct body 45 to the outer side by coming into contact from the outer side in the lateral width direction with a rear lower end vicinity portion of the right side face 41b as a "connecting portion" of the duct body 45 for its connection to the discharging section 34. As shown in Figs. 9 and 10, this duct stopper 58 is formed by bending a plate member into an approximately Z shape to include an upper portion side attaching plate portion 58a, a relaying portion 58b continuous from the lower portion of the attaching plate portion 58a and extending obliquely outwards to the lower side, and a contacting portion 58c continuous from the lower portion of the relaying portion 58b and extending along the left side face of the duct body 45. Further, between the outer face of the relaying portion 58b and the outer face of the contacting portion 58c, there is provided a reinforcing rib 58d integrally.

The duct stopper 58 is provided with its attaching plate portion 58a being connected to the transmission case 14 and its contacting portion 58c being in contact or disposed near the right side face 45b of the duct body 45. The transmission case 14 is comprised of halved separate cases 14A, 14B flange-connected to each other in order to facilitate assembly of e.g. a chain transmission mechanism or the like. As shown in Fig. 9, the left and right separate cases 14A, 14B are connected to each other via bolts Bo, with flange portions formed as separate faces being placed in abutment against each other.

In addition, the attaching plate portion 58a of the duct stopper 58 is connected and fastened with effective utilization of the flange connecting bolts Bo. With disposing a washer 59 between the duct stopper 58 and the transmission case 14, the contacting portion 58c is pressed and attached to the right side face 45b of the duct 35.

As shown in Figs. 8, 9 and 10, on the left side of the duct 35, there is provided a U-shaped receiving member 60 as a left side "deformation preventing member" H for suppressing posture change of the duct body 45 to the outer side by coming into contact from the outer side in the lateral width direction with the rear lower end portion vicinity of the left side wall 45b as a "connecting portion" of the duct body 45 to the discharging section 34.

As described above, on the left side of the duct 35, the mower coupling mechanism 52 is provided. As shown in Figs. 8 and 10, the receiving member 60 is provided as being fixed to the push-pull link 54 of the mower coupling mechanism 52. The receiving member 60 is provided in the form of approximate U shape as a whole with forming, on the opposed end portions in the longitudinal direction of a band-like member with bent portions 62 bent in a same direction. As the push-pull link 54 is inserted into through holes 63 (see Fig. 9) formed in the bent portions 62 on the opposed sides, the receiving member 60 is integrally connected and attached to the outer side of the turnbuckle portion 54a. The receiving member 60 is provided in vicinity of the left side face 45b of the duct body 45. Between the receiving member 60 and the side face 45b, there is provided a slight gap to such a degree not to interfere with the side plate by a pivotal operation of the bottom plate 46.

With application of the above-described configuration, on the right side of the duct 35, with the contacting of the duct stopper 58, posture change of the duct body 45 to the outer side can be suppressed. On the left side of the duct 35, with the contacting of the receiving member 60, posture change of the duct body 45 to the outer side can be suppressed.

### [Other Embodiments]

### (1) [Mower Coupling Mechanism of Further Embodiment]

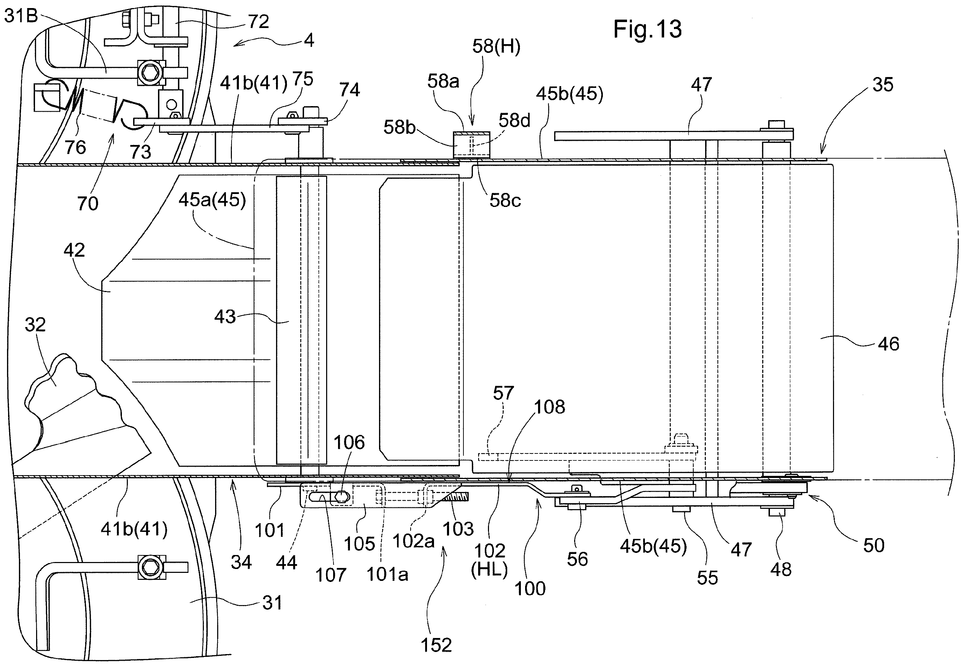

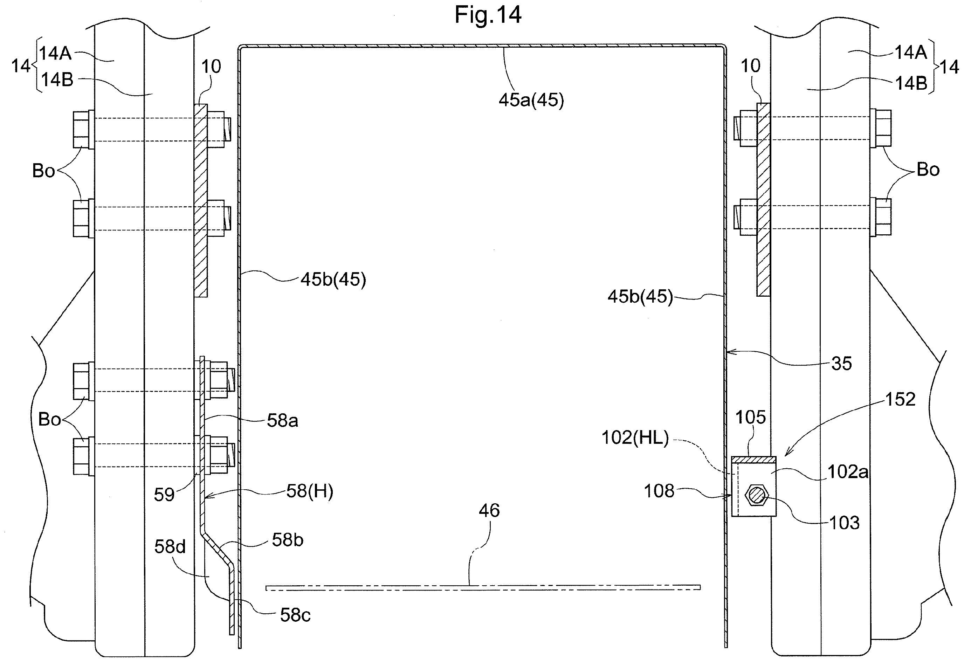

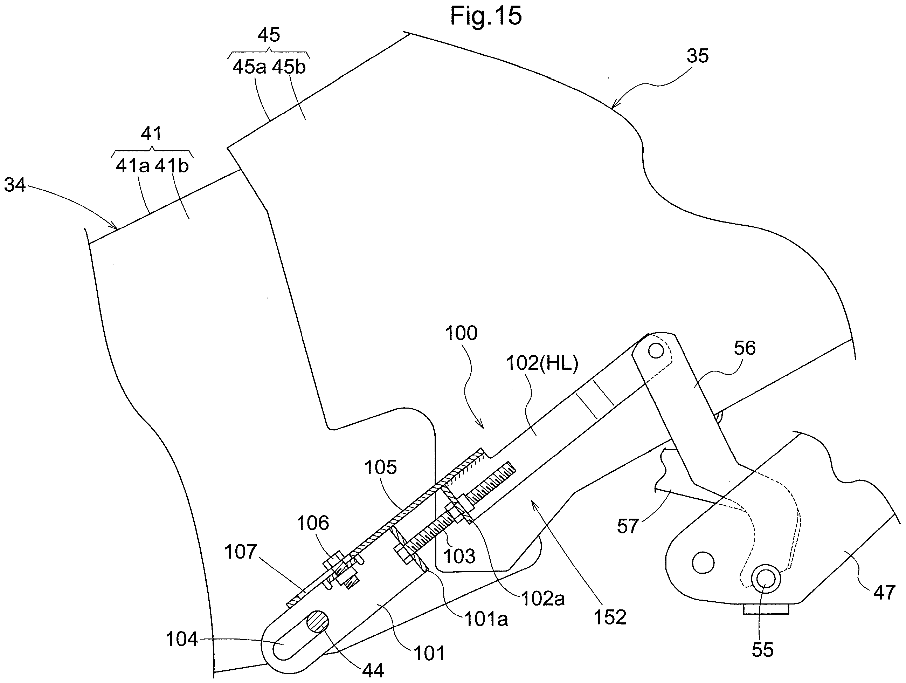

A mower coupling mechanism 152 according to a further embodiment, as shown in Figs. 13, 14, 15, includes a first pivot arm 56, a second pivot arm 57, and a coupling member 100 for operably coupling the free end portion of the first pivot arm 56 to the left end portion of the support shaft 44. The coupling member 100 includes a front coupling portion 101 having a front portion thereof coupled with the pivot shaft 44, a rear coupling portion 102 having a rear end portion thereof coupled with the free end portion of the first pivot arm 56, and an intermediate coupling portion 103 coupled with a front end portion 102a of the rear coupling portion 102 and to a rear end portion 101a of the front coupling portion 101. The coupling between the front coupling portion 101 and the support shaft 44 is effected via an elongate hole 104 provided in the front coupling portion 101 with the support shaft 44 being slidably engaged therein. With this arrangement, even when a pivotal operation of the bottom plate 46 is effected by the second operational lever 51 (see Fig. 1), the guide member 42 is prevented from being pivoted in association therewith. Also, even when a pivotal operation of the guide member 42 is effected by the first operational lever 71 (see Fig. 1), the bottom plate 46 is prevented from being pivoted in association therewith. The intermediate coupling portion 103 is constituted of a screw shaft that allows change of the coupling position of this intermediate coupling portion 103 to the rear coupling portion 102. By changing the coupling position of the intermediate coupling portion 130 to the rear coupling portion 102, length adjustment of the coupling member 100 is possible. A reinforcing member 105 is connected to and between the front coupling portion 101 and the rear coupling portion 102. The coupling between the reinforcing member 105 and the rear coupling portion 102 is effected by welding. The coupling between the reinforcing member 105 and the front coupling portion 101 is effected by a coupling bolt 106. A bolt hole 107 provided for attaching the coupling bolt 106 to the reinforcing member 105 is provided as an elongate hole that allows the length adjustment of the coupling member 100 by the intermediate coupling portion 103. The front coupling portion 101, the rear coupling portion 102 and the reinforcing member 105 are constituted of plate-like members.

### (2) [Deformation Preventing Member of Further Embodiment]

A deformation preventing member HL according to a further embodiment is constituted of the rear coupling portion 102 as shown in Figs. 12, 13 and 14. The rear coupling portion 102 is constituted of a plate-like member. The deformation preventing member HL includes a support face 108 along the side face of the duct 35 and functions to prevent posture deformation of the duct 35 by coming into contact with this duct 35 via the support face 108.

(3) In the foregoing embodiment, there was disclosed an example in which the detent mechanism 90 is employed to make it possible for the second operational lever 51 to maintain the bottom plate 46 under the cut grass conveying posture and the maintenance posture. However, the invention is not limited thereto. For instance, a lever guide for guiding the second operational lever 51 may be provided and this lever guide may include a first retention portion for releasably retaining the second operational lever 51 under the first operational state and a second retention portion for releasably retaining the second operational lever 51 under the second operational state. Further alternatively, an actuator for pivotally operating the bottom plate 46 between the cut grass conveying posture and the maintenance posture and a switch or an operational lever for operating a control section such as an operational valve of the actuator may be provided so that such switch or operational lever, with the function of the actuator, maintains the bottom plate 46 under the cut grass conveying posture and the maintenance posture. In this case, the switch or the operational lever will constitute the "bottom plate operational tool".

(4) In the foregoing embodiment, there was disclosed an example in which the detent mechanism 90 is constituted of the spring 91 and the coupling member 92. However, the invention is not limited thereto. For instance, the detent mechanism 90 may be constituted of a positioning member such as a spherical body, a movable portion having a recess from/in which the positioning member can be engaged/disengaged, and a spring configured to urge the positioning member for its engagement into the recess.

### INDUSTRIAL APPLICABILITY

The present invention is applicable to a grass mowing machine including a mower disposed under a machine body, a discharging section having a guide portion and a duct having a bottom plate vertically pivotable between a cut grass conveying posture and a maintenance posture.

### DESCRIPTION OF REFERENCE SIGNS

- 4:: mower
- 5:: grass collecting section (grass collecting container)
- 34:: discharging section
- 35:: duct
- 42:: guide member
- 42a:: rear portion
- 46:: bottom plate
- 46a:: front portion
- 50:: coupling mechanism
- 51:: bottom plate operational tool (second operational tool)
- 71:: guide operational member (first operational tool)
- 90:: detent mechanism
- 91:: spring
- 92:: coupling member
- A1:: first operational state
- A2:: second operational state

## Claims

1. A grass mowing machine comprising:
a mower (4) disposed under a machine body (10) and configured to carry out a grass cutting work;
a grass collecting section (5) disposed at a rear portion of the machine body (10) and configured to collect cut grass pieces; and
a duct (35) for guiding the cut grass pieces cut by the mower (4) to the grass collecting section (5);
wherein the mower (4) includes:
a discharging section (34) formed cylindrical and configured to discharge the cut grass pieces to the duct (35); and
a guide member (42) which forms a bottom portion of the discharging section (34) and which is vertically pivotable;
wherein the duct (35) includes:
a duct body (45); and
a bottom plate (46) provided at a lower portion of the inner space of the duct body (45); and
a guide operational lever (71) manually operable for pivotally operating the guide member (42);
wherein the bottom plate (46) is supported to be vertically pivotable between a cut grass conveying posture in which a front portion (46a) thereof is placed close to a rear portion (42a) of the guide member (42) and a maintenance posture in which the front portion (46a) is placed upwardly away from the rear portion (42a) of the guide member (42); and
**characterized in that** a bottom plate operational tool (51) is provided for switching over between a first operational state (A1) for switching the posture of the bottom plate (46a) to the cut grass conveying posture and maintaining the bottom plate (46) under the cut grass conveying posture and a second operational state (A2) for switching the posture of the bottom plate (46) to the maintenance posture and maintaining the bottom plate (46) under the maintenance posture.

2. The grass mowing machine of claim 1, wherein:
the bottom plate operational tool (51) comprises an operational lever manually operable and operably coupled with the bottom plate (46) via a coupling mechanism (50); and
a detent mechanism (90) is provided for switching over the operational lever between a first maintaining state for maintaining the operational lever under the first operational state (A1) and a second maintaining state for maintaining the operational lever under the second operational state (A2).

3. The grass mowing machine of claim 2, wherein the detent mechanism (90) is configured to maintain the bottom plate (46) under the cut grass conveying posture and the maintenance posture.

4. The grass mowing machine of claim 2 or 3, wherein:
the detent mechanism (90) includes a spring (91) for urging the operational lever and a coupling member (92) for operably coupling the spring (91) to the operational lever; and
the coupling member (92) is configured to switch over the spring (91) to an urging state for urging the operational lever to the first operational state (A1) in association with switchover of the operational lever to the first operational state (A1) and to switch over the spring (91) to an urging state for urging the operational lever to the second operational state (A2) in association with switchover of the operational lever to the second operational state (A2).

5. The grass mowing machine of any one of claims 1 to 4, further comprising a mower coupling mechanism (52) that is configured to change a posture of the bottom plate (46) in association with a lifting up/down operation of the mower (4).

## Patentansprüche

1. Rasenmähmaschine, umfassend:
einen Rasenmäher (4), der unter einem Maschinenkörper (10) angeordnet ist und dazu ausgestaltet ist, eine Grasschneidearbeit durchzuführen,
eine Grassammelsektion (5), die an einem hinteren Abschnitt des Maschinenkörpers (10) angeordnet ist und dazu ausgestaltet ist, geschnittene Grasstücke zu sammeln, und
einen Kanal (35) zum Führen der geschnittenen Grasstücke, die von dem Rasenmäher (4) geschnitten wurden, zu der Grassammelsektion (5),
wobei der Rasenmäher (4) beinhaltet:
eine Austragsektion (34), die zylindrisch ausgebildet ist und dazu ausgestaltet ist, die geschnittenen Grasstücke zu dem Kanal (35) auszutragen, und
ein Führungselement (42), das einen Bodenabschnitt der Austragsektion (34) bildet und das vertikal schwenkbar ist,
wobei der Kanal (35) beinhaltet:
einen Kanalkörper (45), und
eine Bodenplatte (46), die an einem unteren Abschnitt des Innenraums des Kanalkörpers (45) vorgesehen ist, und
einen Führungsbetriebshebel (71), der manuell zum schwenkbaren Bedienen des Führungselements (42) bedienbar ist,
wobei die Bodenplatte (46) so gestützt wird, dass sie vertikal zwischen einer Transportstellung für geschnittenes Gras, bei der ein vorderer Abschnitt (46a) davon in der Nähe eines hinteren Abschnitts (42a) des Führungselements (42) platziert ist, und einer Haltestellung schwenkbar ist, bei der der vordere Abschnitt (46a) aufwärts gerichtet entfernt von dem hinteren Abschnitt (42a) des Führungselements (42) platziert ist, und
**dadurch gekennzeichnet, dass** ein Bodenplatten-Betriebswerkzeug (51) vorgesehen ist, um zwischen einem ersten Betriebszustand (A1) zum Wechseln der Stellung der Bodenplatte (46a) in die Transportstellung für geschnittenes Gras und Halten der Bodenplatte (46) in der Transportstellung für geschnittenes Gras und einem zweiten Betriebszustand (A2) zum Wechseln der Stellung der Bodenplatte (46) in die Haltestellung und Halten der Bodenplatte (46) in der Haltestellung umzustellen.

2. Rasenmähmaschine nach Anspruch 1, wobei:
das Bodenplatten-Betriebswerkzeug (51) einen Betriebshebel umfasst, der manuell bedienbar ist und betriebsmäßig mit der Bodenplatte (46) über einen Kopplungsmechanismus (50) gekoppelt ist, und
ein Feststellmechanismus (90) vorgesehen ist, um den Betriebshebel zwischen einem ersten Haltezustand zum Halten des Betriebshebels in dem ersten Betriebszustand (A1) und einem zweiten Haltezustand zum Halten des Betriebshebels in dem zweiten Betriebszustand (A2) umzustellen.

3. Rasenmähmaschine nach Anspruch 2, wobei der Feststellmechanismus (90) dazu ausgestaltet ist, die Bodenplatte (46) in der Transportstellung für geschnittenes Gras und der Haltestellung zu halten.

4. Rasenmähmaschine nach Anspruch 2 oder 3, wobei:
der Feststellmechanismus (90) eine Feder (91) zum Drücken des Betriebshebels und ein Kopplungselement (92) zum betriebsmäßigen Koppeln der Feder (91) mit dem Betriebshebel beinhaltet, und
das Kopplungselement (92) dazu ausgestaltet ist, die Feder (91) in einen Drückzustand umzustellen, um den Betriebshebel in den ersten Betriebszustand (A1) in Verbindung mit dem Umstellen des Betriebshebels in den ersten Betriebszustand (A1) zu drücken und die Feder (91) in einen Drückzustand umzustellen, um den Betriebshebel in den zweiten Betriebszustand (A2) in Verbindung mit dem Umstellen des Betriebshebels in den zweiten Betriebszustand (A2) zu drücken.

5. Rasenmähmaschine nach einem der Ansprüche 1 bis 4,
ferner umfassend einen Rasenmäher-Kopplungsmechanismus (52), der dazu ausgestaltet ist, eine Stellung der Bodenplatte (46) in Verbindung mit einem Hebe-/Senkbetrieb des Rasenmähers (4) zu wechseln.

## Revendications

1. Tondeuse à gazon comprenant :
une tondeuse (4) disposée sous un corps de machine (10) et configurée pour réaliser un travail de tonte de gazon ;
une section de collecte de gazon (5) disposée au niveau d'une partie arrière du corps de machine (10) et configurée pour collecter des morceaux de gazon coupé ; et
un conduit (35) pour guider les morceaux de gazon coupés par la tondeuse (4), vers la section de collecte de gazon (5) ;
dans laquelle la tondeuse (4) comprend :
une section de décharge (34) de forme cylindrique et configurée pour décharger les morceaux de gazon coupé dans le conduit (35) ; et
un élément de guidage (42) qui forme une partie inférieure de la section de décharge (34) et qui peut pivoter verticalement ;
dans laquelle le conduit (35) comprend :
un corps de conduit (45) ; et
une plaque inférieure (46) prévue au niveau d'une partie inférieure de l'espace interne du corps de conduit (45) ; et
un levier d'actionnement de guidage (71) pouvant fonctionner manuellement pour actionner de manière pivotante l'élément de guidage (42) ;
dans laquelle la plaque inférieure (46) est supportée pour pouvoir pivoter verticalement entre une posture de transport de gazon coupé dans laquelle sa partie avant (46a) est placée à proximité d'une partie arrière (42a) de l'élément de guidage (42) et une posture de maintenance dans laquelle la partie avant (46a) est placée vers le haut à distance de la partie arrière (42a) de l'élément de guidage (42) ; et
**caractérisé en ce qu'**un outil d'actionnement de plaque inférieure (51) est prévu pour commuter entre un premier état de fonctionnement (A1) pour commuter la posture de la plaque inférieure (46a) vers la posture de transport de gazon coupé et maintenir la plaque inférieure (46) dans la posture de transport de gazon coupé et un second état de fonctionnement (A2) pour commuter la posture de la plaque inférieure (46) vers la posture de maintenance et maintenir la plaque inférieure (46) dans la posture de maintenance.

2. Tondeuse à gazon selon la revendication 1, dans laquelle :
l'outil d'actionnement de plaque inférieure (51) comprend un levier d'actionnement pouvant être actionné manuellement et couplé fonctionnellement à la plaque inférieure (46) via un mécanisme de couplage (50) ; et
un mécanisme de détente (90) est prévu pour commuter le levier d'actionnement entre un premier état de maintien pour maintenir le levier d'actionnement dans le premier état de fonctionnement (A1) et un second état de maintien pour maintenir le levier d'actionnement dans le second état de fonctionnement (A2).

3. Tondeuse à gazon selon la revendication 2, dans laquelle le mécanisme de détente (90) est configuré pour maintenir la plaque inférieure (46) dans la posture de transport de gazon coupé et la posture de maintenance.

4. Tondeuse à gazon selon la revendication 2 ou 3, dans laquelle :
le mécanisme de détente (90) comprend un ressort (91) pour pousser le levier d'actionnement et un élément de couplage (92) pour coupler fonctionnellement le ressort (91) au levier d'actionnement ; et
l'élément de couplage (92) est configuré pour commuter le ressort (91) dans un état de poussée pour pousser le levier d'actionnement dans le premier état de fonctionnement (A1) en association avec la commutation du levier d'actionnement dans le premier état de fonctionnement (A1) et pour commuter le ressort (91) dans un état de poussée pour pousser le levier d'actionnement dans le second état de fonctionnement (A2) en association avec la commutation du levier d'actionnement dans le second état de fonctionnement (A2).

5. Tondeuse à gazon selon l'une quelconque des revendications 1 à 4, comprenant en outre un mécanisme de couplage de tondeuse (52) qui est configuré pour modifier une posture de la plaque inférieure (46) en association avec une opération ascendante/descendante de levage de la tondeuse (4).
